# EUROPÄISCHE PATENTSCHRIFT

(11) **EP 3 258 286 B1**
(45) Veröffentlichungstag und Bekanntmachung des Hinweises auf die Patenterteilung: **24.07.2019**
(21) Anmeldenummer: 17159676.0
(22) Anmeldetag: 07.03.2017
(51) Int. Cl.: G01S 1/04, G01S 1/08, G01S 13/87

(54) **VERFAHREN ZUR NETZWERKINITIALISIERUNG EINES NETZWERKS ZUR FUNKORTUNG VON OBJEKTEN INNERHALB EINES BEGRENZTEN RAUMES**
METHOD FOR A NETWORK INITIALIZATION OF A NETWORK FOR RADIOLOCATION OF OBJECTS WITHIN A LIMITED SPACE
PROCÉDÉ D'INITIALISATION DE RÉSEAU POUR LA RADIOLOCALISATION D'OBJETS DANS UN ESPACE DÉLIMITÉ

(30) Priorität: 28.04.2016 DE 102016107940
(43) Veröffentlichungstag der Anmeldung: 20.12.2017
(73) Patentinhaber: Balluff GmbH, 73765 Neuhausen a.d.F. (DE)
(72) Erfinder: Heldmaier, Matthias Michael, 70569 Stuttgart (DE); Schürzinger, Andreas, 73525 Schwäbisch Gmünd (DE); Schweizer, Daniel, 70794 Filderstadt (DE)
(74) Vertreter: Jakelski & Althoff Patentanwälte PartG mbB

(56) Entgegenhaltungen:
- WO-A1-2015/192113
- US-A- 6 133 876
- US-B2- 7 873 099

## Beschreibung

Die Erfindung betrifft ein Verfahren zur Initialisierung eines Netzwerks zur drahtlosen Ortung bzw. Positionsbestimmung von Objekten innerhalb eines begrenzten Raumes gemäß dem Oberbegriff des Anspruchs 1. Gegenstand der vorliegenden Erfindung sind auch ein Computerprogramm und ein maschinenlesbarer Datenträger zur Speicherung des Computerprogramms, mittels derer das erfindungsgemäße Verfahren durchführbar ist.

### Stand der Technik

Im Bereich von industriellen Werkshallen, Produktionshallen, Werksgeländen oder dergleichen ist es bekannt, sich bewegende Objekte mittels drahtloser bzw. funktechnischer Lokalisierung räumlich zu orten. Bei solchen Objekten kann es sich zum einen um automatische Flurförderzeuge bzw. -geräte ("Automated Guided Vehicles - AGV") handeln, welche in fahrerlosen Transportsystemen eingesetzt werden. Diese Förderzeuge werden automatisch geführt und bewegen sich ohne menschliches Einwirken entlang realer oder virtueller Leitlinien. In den Bereichen der Lagerhaltung oder der industriellen Produktion kann eine solche Ortung z.B. in einem Stahlwerk deponierte Stahlprodukte wie Brammen oder Coils betreffen, wobei es sich bei den Objekten aber auch um autarke Roboterfahrzeuge, Gabelstapler oder dergleichen handeln kann. Dabei kann eine eindimensionale Ortung entlang einer Spurführung z.B. eines Krans, eine zweidimensionale Ortung in einer ebenen Fläche oder eine räumliche Ortung von Objekten z.B. in einem dreidimensionalen Lagerhaltungssystem erfolgen.

Ein solches funktechnisches Ortungssystem ist aus der US 6,133,876 bekannt geworden und betrifft ein Verfahren und eine Netzwerkanordnung zur Positionsbestimmung mittels pulsförmiger Funksignale (sogenanntes "Impulsfunksystem"). Dabei sind ein erster Transceiver mit einem ersten Takt und ein von dem ersten Transceiver beabstandeter, einen zweiten Takt aufweisender zweiter Transceiver vorgesehen. Unter Verwendung des ersten Taktes wird ein erster Referenztaktimpuls erzeugt und mit diesem Referenztaktimpuls eine erste Folge von Impulsen von dem ersten Transceiver übertragen. Diese erste Folge von Impulsen wird von dem zweiten Transceiver empfangen und der zweite Transceiver anhand dieser Impulse synchronisiert. Unter Verwendung des zweiten Taktes wird von dem zweiten Transceiver ein zweiter Referenztaktimpuls erzeugt und damit von dem zweiten Transceiver eine zweite Folge von Impulsen übertragen. Der erste Transceiver empfängt diese zweite Folge von Impulsen und führt damit eine Synchronisation durch. Auf der Grundlage dieser Synchronisation wird dann ein entsprechend zeitlich verzögerter erster Referenztaktimpuls erzeugt und daraus die Zeitdifferenz zwischen dem ersten Referenzimpuls und dem verzögerten ersten Referenzimpuls bestimmt, wobei diese Zeitdifferenz eine Gesamtlaufzeit der ersten und der zweiten Folge von Impulsen angibt.

Ein auf der Grundlage von Ultrabreitband- (UWB-) Signalen basierendes, entsprechend auf Laufzeit- bzw. Flugzeitmessungen beruhendes Ortungssystem geht aus der US 7,873,099 hervor, bei dem ein UWB-Empfänger eines entsprechenden Datenkommunikationsnetzes empfängerseitige Zeitinformationen, basierend auf einer empfangenen Signalstruktur, synchronisiert, wobei die Zeitinformationen demoduliert werden und wobei die demodulierten Zeitinformationen verwendet werden, einen empfängerseitigen Takt festzulegen. Anhand von Informationen über die Laufzeitverzögerung wird der empfangsseitige Takt angepasst, und zwar durch Erhöhen des Taktwertes, um die genannte Laufzeitverzögerung auszugleichen. Die Laufzeitverzögerung wird auf der Grundlage eines vorbekannten Abstandes zwischen dem Sender und dem Empfänger ermittelt, wobei der Sender und der Empfänger Teil einer Zwei-Wege-Verbindung sein können und wobei die Laufzeitverzögerung durch Messung einer Paketumlaufzeit (sogenanntes "round trip timing"), d.h. durch Messung einer Zeit, die ein Datenpaket in dem Datenkommunikationsnetz für die Übermittlung vom Sender zu dem Empfänger und zurück benötigt, ermittelt wird.

Aus der WO 2015/192113 A1 geht ein Verfahren zur drahtlosen Datenübertragung von Positionsreferenzsignalen zwischen Benutzereinheiten, die beispielsweise Zugangsterminals, Funktelefone und dergleichen sein können, und einer zentralen Einheit hervor. Die Funkübertragung erfolgt dabei beispielsweise via LTE-Verbindung. Das Verfahren ermöglicht die Ortung und Lokalisierung von mobilen Einrichtungen.

### Offenbarung der Erfindung

Die Erfindung betrifft ein Verfahren zur Initialisierung eines hier betroffenen Netzwerks, z.B. bei seiner Inbetriebnahme oder bei einem Neustart des Netzwerks, welches zur Ortung bzw. räumlichen Lokalisierung hier betroffener, bevorzugt innerhalb eines räumlich abgegrenzten Raumes bzw. Geländes sich bewegender (Ortungs-)Objekte mittels eines drahtlosen bzw. funkgestützten, abstandsbasierten Messverfahrens dient. Ein solches Messverfahren beruht bevorzugt auf der Grundlage von genannten Laufzeit- bzw. Flugzeitmessungen, wobei jedes der genannten Objekte ein nachfolgend im Detail beschriebenes "Label" besitzt, anhand dessen das Objekt eindeutig identifizierbar bzw. eindeutig von anderen Objekten unterscheidbar ist. Ein an dem Messverfahren aktiv teilnehmendes Objekt wird nachfolgend auch als "Teilnehmer" bezeichnet. Ein Objekt kann dabei an einem eingangs genannten Flurförderzeug oder an jedem anderen Vermögenswert angeordnet
sein, dessen Ort in einem solchen Raum zu bestimmen ist.

Das Messverfahren sowie das Netzwerk beruhen auf einer Netzwerk-Topologie, bei der eine Anzahl von autarken Referenzknoten in dem begrenzten Raum bzw. Gelände verteilt angeordnet sind. Das entsprechende Netzwerk wird bevorzugt mittels eines oder mehrerer Administrationsknoten gesteuert. Es ist jedoch anzumerken, dass die Funktionalität des wenigstens einen Administrationsknotens auch in einem Referenzknoten implementiert sein kann. Die Referenzknoten sind bevorzugt kommunikationstechnisch
linienförmig miteinander verbunden, bevorzugt durch eine an sich bekannte, drahtlose "Daisy Chain"(DC)-Verkettung, wodurch erreicht werden kann, dass die Kommunikation zwischen den Referenzknoten bzw. zwischen einem Administrationsknoten und den Referenzknoten kontrollierbar erfolgt.

Alternativ kann die Verkettung auch ringförmig, sternförmig, kreisförmig oder in irgendeiner anderen Weise ausgebildet sein, sofern die Verkettung zwischen zwei Referenzknoten zumindest lokal linienförmig erfolgt. Dabei können in einem Netzwerksegment auch wenigstens zwei Daisy Chain-(DC-)Topologien angeordnet sein, was den weiteren Vorteil hat, dass bei einer Neuanmeldung eines Teilnehmers in der ersten DC-Topologie gleichzeitig in der zweiten DC-Topologie ein laufendes Messverfahren weiterhin störungsfrei durchgeführt werden kann.

Bei dem erfindungsgemäßen Verfahren zur Initialisierung eines genannten Netzwerks ist vorgesehen, dass die Referenzknoten zunächst in einer Wartestellung sind, in der sie zunächst nur Broadcast-Kanäle abhören, und zwar solange, bis sie aus einem Broadcast eines beliebigen Administrationsknotens initiale Informationen darüber empfangen, ob und in welchem Segment sie ein Referenzknoten sind oder nicht. Die Referenzknoten erzeugen durch Kommunikation mit benachbarten Referenzknoten eine Nachbar-Datenbank, mittels der die beiden Daisy-Chains von den Referenzknoten nach erfolgter Initialisierung autark betrieben werden können.

Bei dem erfindungsgemäßen Verfahren kann vorgesehen sein, dass der wenigstens eine Administrationsknoten an die Referenzknoten DC Setup-Informationen kommuniziert, welche in einer Daisy Chain an andere Referenzknoten sukzessive weiterkommuniziert werden. Die genannten DC Setup-Informationen umfassen bevorzugt die Chain-Länge sowie entsprechende UIDs und LIDs für die an der Chain beteiligten Referenzknoten.

Eine genannte "UID" stellt dabei eine an sich bekannte eindeutige, von der jeweiligen Position im Netzwerk unabhängige Identifizierungskennung eines Teilnehmers im Netzwerk dar, z.B. eine an sich bekannte "MAC-ID". Eine genannte "LID" entspricht einer von der Position des Teilnehmers im Netzwerk abhängigen, ebenfalls an sich bekannten lokalen Kennung.

Bei dem erfindungsgemäßen Verfahren kann ferner vorgesehen sein, dass ausgehend von einem letzten Referenzknoten in einer so gebildeten Daisy Chain, nach Erhalt der genannten Informationen, über die Referenzknoten der Chain sukzessive ein propagierender Bestätigungs-Rücklauf (DC Setup-"Acknowledge") an alle anderen Referenzknoten eines vorliegenden Netzwerksegments erfolgt. Die dabei propagierten Informationen können die Rückgabe einer jeweiligen LID umfassen, sowie die LIDs der Referenzknoten, über die der Bestätigungs-Rücklauf bis zum aktuellen Zeitpunkt gelaufen ist. In dem entsprechenden, rücklaufenden Datenpaket können noch weitere Informationen enthalten sein, die die erfolgreiche Bildung der Daisy Chain bestätigen und der Netzwerkdiagnose dienen. Im Fall des Fehlschlagens kann der Administrationsknoten so eine andere Daisy Chain-Konfiguration berechnen.

Bei dem erfindungsgemäßen Verfahren kann ferner vorgesehen sein, dass der Administrationsknoten Initialisierungspakete an die Referenzknoten versendet. Diese Initialisierungspakete bestehen bevorzugt aus einer Lokalisierungsmessanforderung an den jeweiligen Referenzknoten, aus einem Kommando, welches die Segment-Initialisierung signalisiert, und weiteren Informationen, welche die Netzwerktopologie und/oder den Konfigurationszustand des Administrationsknotens beschreiben. Die genannten weiteren Informationen können die verwendete Firmware, die Anzahl der im Netzwerk vorhandenen Segmente, sowie die genannten UIDs der Referenzknoten, die zu den jeweiligen Segmenten gehören, sowie die genannten SIDs der entsprechenden Segmente und die Zuordnung der Referenzknoten zu den Segmenten umfassen.

Bei dem erfindungsgemäßen Verfahren kann ferner vorgesehen sein, dass die Referenzknoten eine Nachbar(schafts)-Datenbank erstellen, welche eine Statistik darüber enthält, von welchen Teilnehmern eine Kommunikation gehört werden konnte, unter welchen Signal- und Störsignalpegeln und/oder wie oft die Lokalisierungsmessung funktioniert oder fehlgeschlagen ist. Anhand dieser Statistik kann auch eine sehr effiziente Fehlerdiagnose durchgeführt werden. Darüber hinaus können in der Nachbarschaftsdatenbank auch Informationen zu gemessenen Abständen der beteiligten Referenzknoten und/oder über empfangene Initialisierungspaketseiten bereitgestellt werden. Diese Informationen können während der Initialisierung an andere Referenzknoten mitgeteilt werden, um so eine segmentweit einheitliche Nachbarschaftsdatenbank zu erzeugen bzw. zu erhalten.

Bei dem erfindungsgemäßen Verfahren kann ferner vorgesehen sein, dass der Administrationsknoten nach Beendigung einer genannten Statistikerhebung eine tragfähige Segmentstruktur in Form funktionierender Daisy Chains bildet, wobei bevorzugt zwei Ketten aus Referenzknoten, die einen möglichst zuverlässigen Datenaustausch gewährleisten, gebildet werden und wobei die beiden Chains bevorzugt gleich lang sind.

Bei dem erfindungsgemäßen Verfahren kann ferner vorgesehen sein, dass der Administrationsknoten nach der Generierung der Daisy Chains den Referenzknoten der so gebildeten Chains die erfolgte Verknüpfung zusammen mit einem Kommando mitteilt, mittels dessen die Konstruktion der jeweiligen Daisy Chain angeordnet wird. Die dazu verwendete Nachricht enthält bevorzugt die Länge der Chain(s), einen Zähler sowie UIDs und LIDs der Referenzknoten in der Reihenfolge, wie sie in der jeweiligen Chain aufeinander folgen.

Das erfindungsgemäße Verfahren zur Initialisierung wird bevorzugt mittels eines oder mehrerer in dem Netzwerk zusätzlich angeordneten Administrationsknoten ausgeführt. Es ist jedoch anzumerken, dass die Funktionalität des wenigstens einen Administrationsknotens auch in wenigstens einem genannten Referenzknoten implementiert sein kann.

Das erfindungsgemäße Verfahren zur Initialisierung kann auch in einem Netzwerk angewendet werden, welches in wenigstens zwei Segmente aufgeteilt ist, wodurch sich auch großflächige oder großräumige Werkshallen oder Werksgelände mit nur einem Positionsbestimmungs- bzw. -überwachungssystem abdecken lassen. Die wenigstens zwei Segmente können bei der Initialisierung des gesamten Netzwerkes oder nur eines Segments ihre Kommunikation innerhalb ihres jeweiligen Segments selbständig so organisieren, dass belastbare Strukturen entstehen, in denen die Kommunikation möglichst fehlerfrei stattfinden kann. Gleichzeitig kann so auf eine z.B. durch einen Umbau bedingte Veränderung einer Werkshalle und den damit verbundenen Veränderungen bezüglich der Eigenschaften der Werkshalle im Hinblick auf die elektromagnetische Wellenausbreitung reagiert werden.

Das nach der erfindungsgemäßen Initialisierung bzw. in dem entsprechend initialisierten Netzwerk durchgeführte Messverfahren zur Lokalisierung von Objekten erfolgt durch "Trilateration", und zwar mittels gepulster Funksignale, z.B. mittels Ultrabreitband (UWB)-Funk- bzw. Messsignalen oder entsprechend kurzpulsigen Messsignalen. Die Trilateration beruht dabei auf entsprechenden Entfernungsmessungen bzw. Abstandsmessungen zu mindestens drei Punkten im Falle einer zweidimensionalen Positionsbestimmung oder zu mindestens vier Punkten im Falle einer dreidimensionalen bzw. räumlichen Positionsbestimmung. Die an sich bekannte UWB-Technik ist für den vorliegenden, räumlich begrenzten Messbereich als Nahbereichs-Funktechnik besonders geeignet. Die Messsignale für die Flugzeitmessungen werden bevorzugt in einer Abfolge von zeitlich aufeinander folgenden Zeitfenstern bzw. Zeitschlitzen ("time slots") ausgesendet bzw. empfangen. Werden nur im Zeitbereich sehr kurze Pulse eines Signals bei einer gewissen Trägerfrequenz ausgesandt, ergibt sich im Frequenzraum durch Fouriertransformation ein breitbandiges Spektrum. Für UWB-Signale liegt diese Bandbreite im Bereich von ≥ 500 MHz. Die sehr kurzen Pulse werden sich vorliegend zu Zwecken einer genauen Ortung von Objekten und/oder Referenzknoten zunutze gemacht. Die Messungen werden bevorzugt von genannten Ortungsobjekten initiiert, wobei eine Anordnung von wenigstens drei Referenzknoten eine präzise Raumortung von Objekten bzw. Teilnehmern in einer Ebene und wobei eine Anordnung von wenigstens vier Referenzknoten eine präzise Raumortung von Objekten bzw. Teilnehmern im dreidimensionalen Raum ermöglichen.

Das Messverfahren kann durch eine geeignete Kombination sowohl eines Zeitmultiplexverfahrens ("TDMA") als auch eines Codemultiplexverfahrens ("CDMA") realisiert werden. Von Bedeutung für eine spätere Positionsbestimmung aus Abstandsmessungen im eigentlichen Messablauf nach der Netzwerkinitialisierung ist insbesondere das TDMA-Verfahren sowie eine entsprechende Vorgehensweise, welche in der Voranmeldung DE 10 2016 103 077.5 ausführlich beschrieben ist und mittels der die hier betroffenen Zeitfenster dynamisch erzeugbar sind. Dabei wird über einen genannten Signalweg, z.B. UWB, allen Teilnehmern dynamisch eine neue TDMA-Zeitschlitzkarte bzw. -plan ("TDMA Slot Map") bereitgestellt. Gleichzeitig wird neuen Teilnehmern die Topologie des vorliegenden Netzwerkes mitgeteilt, so dass der Konfigurationsaufwand größtenteils bzw. sogar vollständig entfällt.

In einer genannten TDMA Slot Map kann auch ein spezieller Zeitschlitz ("Forward Broadcast-Slot") vorgesehen sein, der zum Transport von Netzwerkinformationen freigehalten wird. Unter den Informationen, die im Broadcast-Slot transportiert werden, befinden sich beispielsweise Informationen zum Koordinatensystem, zur Netzwerktopologie (z.B. eine genannte Almanach-Liste). Zusätzlich können die genannten IDs (UID und LID) von Teilnehmern kommuniziert werden, deren Neuanmeldung im Netzwerk bereits akzeptiert wurde. Die genannten Informationen stellen dabei nur Beispiele an möglichen Informationen dar, es sind beliebige weitere Informationen übertragbar. Ergeben sich keine Änderungen im Netzwerk, ist der Forward Broadcast im Prinzip ungenutzt. Um eine größtmögliche Redundanz zu erreichen, hören während des Broadcasts alle anderen Teilnehmer (egal ob Ortungsobjekt oder Referenzknoten) im Lokalisierungs-Segment nur zu bzw. verarbeiten die im Broadcast enthaltene Information gegebenenfalls.

Bei den zusätzlichen Informationen kann eine lokale Kennung ("SID" = Segment-Identifikationsnummer) eines Netzwerksegments vorgesehen sein, wobei in einem mehrere Segmente aufweisenden Netzwerk die Kombination aus SID und LID die für den Messbetrieb notwendige Kennung eines Teilnehmers bereitstellt. Die per CDMA generierten Kommunikationskanäle, die in einem einzelnen Segment zur Anmeldung und den Messbetrieb verwendet werden, können unter Verwendung der SID eindeutig bestimmt und in Kanalbündel eingeteilt werden.

Auch kann ein sogenannter "Return Broadcast" vorgesehen sein, und zwar ein Informationstelegramm, mit dem sich benachbarte Teilnehmer in einer Daisy Chain in umgekehrter Kommunikationsrichtung wie beim Forward-Broadcast mitteilen, wer sich im aktuellen Durchlauf der TDMA-Slot Map neu im Netzwerk oder Segment angemeldet oder abgemeldet hat. Es können weitergehend Informationen zur Netzwerkdiagnose übertragen werden.

Mit dem erfindungsgemäßen Verfahren zur Initialisierung wird eine belastbare Kommunikationsstruktur und Netzwerkinitialisierung der Infrastruktur erreicht, die die autonome Anmeldung von Ortungsobjekten und einen zuverlässigen Messablauf sogar bei sich verändernden Umgebungsbedingungen erlaubt. Es kann auf Veränderungen der Umgebung in funktechnischer Hinsicht reagiert werden. Die Reorganisation von Segmenten kann losgelöst vom Gesamtnetzwerk erfolgen. Es werden daher nur relativ wenige, spezielle Datenverbindungen außerhalb des UWB-Netzes (z.B. LAN, WLAN) benötigt. In speziellen Ausführungen des Systems kann auf Datenverbindungen komplett verzichtet werden. Zudem kann ohne aufwändige externe Neukonfiguration auf Störungen im Funkbetrieb sowie bei einem Ausfall eines Referenzknotens unmittelbar durch Reorganisation reagiert werden.

Es ist zudem anzumerken, dass die gesamte, hierin beschriebene Kommunikation bzw. entsprechende Signalübertragung zur Netzwerkinitialisierung sowohl synchron als auch asynchron erfolgen kann.

Das erfindungsgemäße Computerprogramm ist eingerichtet, jeden Schritt des Verfahrens durchzuführen, insbesondere wenn es auf einem Rechengerät abläuft. Hierzu ist der maschinenlesbare Datenträger vorgesehen, auf welchem das erfindungsgemäße Computerprogramm gespeichert ist. Durch Aufspielen des erfindungsgemäßen Computerprogramms in ein hier betroffenes Netzwerk, insbesondere in einen genannten Administrationsknoten oder ein damit verbundenes Datenverarbeitungsgerät, wird das erfindungsgemäße Verfahren zur Initialisierung, insbesondere zur selbstorganisierenden Initialisierung eines hier betroffenen Netzwerks erhalten, wobei das so initialisierte Netzwerk eingerichtet ist, um ein genanntes Messverfahren zu betreiben bzw. zu steuern.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweiligen angegebenen Kombination, sondern auch in anderen Kombinationen oder in Alleinstellung verwendbar sind, ohne den Rahmen der vorliegenden Erfindung zu verlassen.

### Kurzbeschreibung der Figuren

- Figur 1: zeigt ein aus zwei Daisy Chains gebildetes, ein Segment umfassendes Netzwerk, in dem eine erfindungsgemäße Initialisierung durchgeführt werden kann.
- Figuren 2a - 2g: zeigen beispielhafte Zustände bei einer erfindungsgemäßen Initialisierung eines hier betroffenen Netzwerks zu verschiedenen Zeitpunkten.
- Figur 3a: zeigt tabellarisch einen exemplarischen zeitlichen Ablauf eines Kommunikationsprotokolls zur erfindungsgemäßen Abstandsmessung in einem Lokalisierungssegment, wie es nach Abschluss der Initialisierung eines in Figur 1 gezeigten Segments gültig wird. Diese Tabelle entspricht einer grundlegenden "TDMA-Slot Map", welche eine grundsätzliche Abfolge von Zeitschlitzen bildet.
- Figur 3b: zeigt eine beispielhafte Kanalverteilung in einem aus mehreren Segmenten gebildeten Netzwerk, wobei jedes der einzelnen Segmente ähnlich dem in Figur 1 gezeigten Segment aufgebaut ist.
- Figur 4: zeigt ein Ausführungsbeispiel des erfindungsgemäßen Verfahrens zur Netzwerkinitialisierung anhand eines Flussdiagramms

### Detaillierte Beschreibung der Ausführungsbeispiele

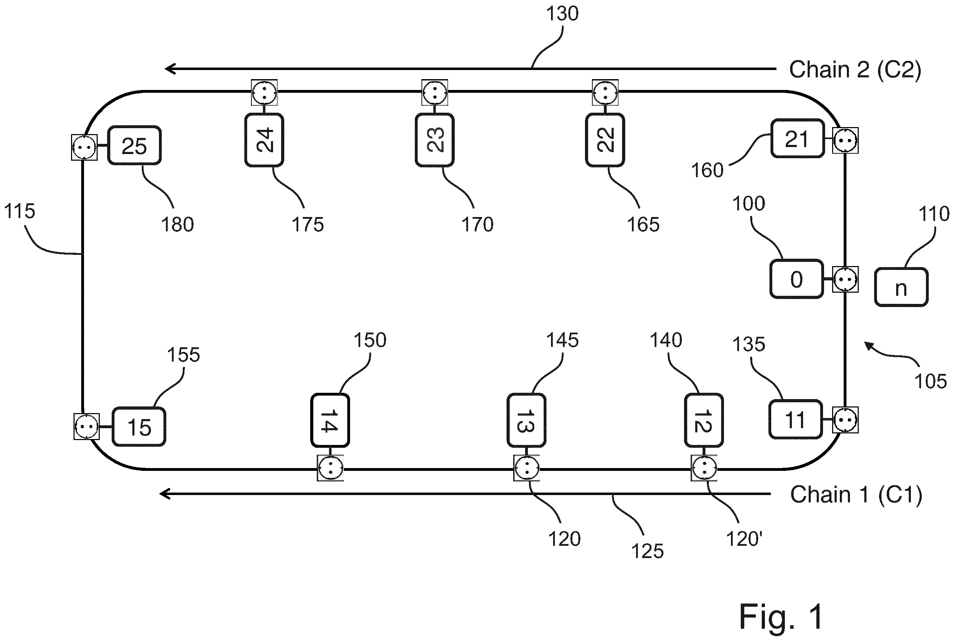

Figur 1 zeigt einen beispielhaften logischen Aufbau eines aus zwei Daisy Chains gebildeten Ortungssegments eines Lokalisierungsnetzwerks. Bei der in dem Beispiel auf einer genannten UWB-Technik basierenden Kommunikationskette werden Kommunikationsbotschaften zwischen "benachbarten" Teilnehmern innerhalb der beiden "Daisy Chains" sequentiell propagiert.

Die in Figur 1 gezeigte Anordnung umfasst einen Administrationsknoten 100, der in dem Ausführungsbeispiel über eine Ethernet-Verbindung 105 mit einem externen IT-Server 110 in an sich bekannter Weise datentechnisch verbunden ist. Diese Server-Funktionalität kann allerdings auch im dem Administrationsknoten 100 selbst implementiert sein. Durch die Linie 115 ist ein abgegrenzter Raum definiert, in dem die Teilnehmer angeordnet sein bzw. sich (dynamisch) bewegen können. An dieser äußeren Begrenzungslinie 115 sind Stromversorgungen 120, 120' angeordnet, um die Teilnehmer mit der für deren Betrieb notwendigen elektrischen Energie zu versorgen.

Von dem Administrationsknoten 100 zweigen in der unteren Hälfte der Darstellung eine erste Daisy Chain (C1) 125 und in der oberen Hälfte der Darstellung eine zweite Daisy Chain (C2) 130 ab. Entlang der ersten Daisy Chain 125 sind in diesem Ausführungsbeispiel fünf Referenzknoten 135 - 155 und in der zweiten Daisy Chain 130 ebenfalls fünf Referenzknoten 160 - 180 angeordnet. Es ist anzumerken, dass in dieser Darstellung noch keine (eigentlichen) Ortungsobjekte gezeigt sind.

Eine in dem in Figur 1 gezeigten Netzwerk durchgeführte Lokalisierungsmessung von Teilnehmern erfolgt mittels der bekannten Methode der "Trilateration". Diese Methode beruht darauf, dass im Falle der Kenntnis nur der Entfernung eines Objektes zu einem bekannten Punkt, der eigene Standort (bei ebener Betrachtung) auf einem Kreis liegt, bzw. im 3D-Raum auf einer Kugelschale um diesen Punkt. Bei zwei bekannten Punkten liegt der eigene Standort auf den Schnittpunkten der beiden Kugelschalen, also auf einer Kreislinie.

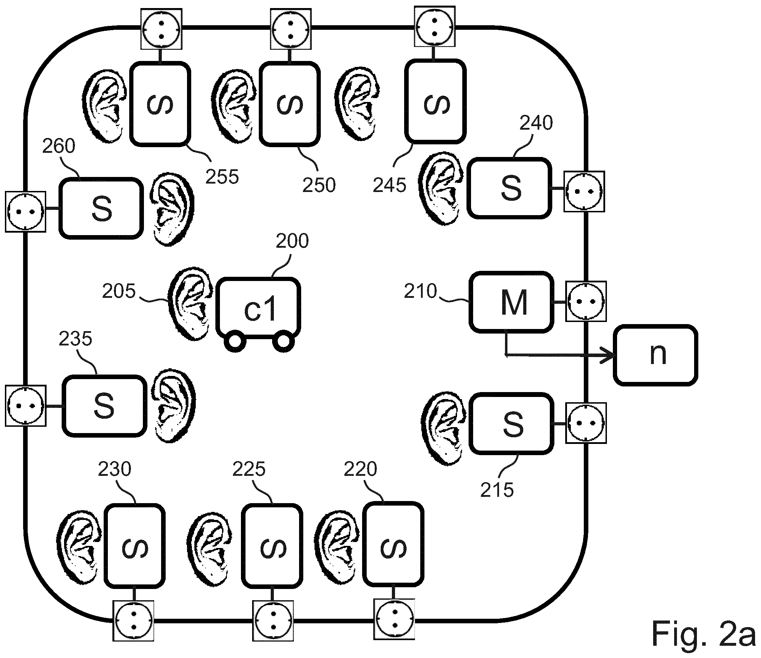

In den Figuren 2a - 2g werden beispielhafte Verfahrensschritte eines ersten Ausführungsbeispiels des erfindungsgemäßen Verfahrens zur Initialisierung eines beispielhaft in Figur 1 gezeigten Netzwerksegments anhand einer Folge von Netzwerkzuständen illustriert. In diesen Darstellungen (Figuren 2a - 2g) ist ein einzelnes Ortungsobjekt 200 gezeigt, welches noch nicht angemeldet ist und demnach noch kein "Teilnehmer" im vorliegenden Sinne ist. Daher ist in Figur 2a das Objekt 200 mit einem menschlichen Ohr 205 versehen, um dadurch anzudeuten, dass das Objekt 200, wie nachfolgend im Detail beschrieben, einen Broadcast-Kanal abhört.

Es ist anzumerken, dass die gesamte, hierin beschriebene Kommunikation bzw. entsprechende Signalübertragung zur Netzwerkinitialisierung sowohl synchron als auch asynchron erfolgen kann. In dem nachfolgenden Ausführungsbeispiel wird dabei nur eine asynchrone Signalübertragung angenommen, wobei die nachfolgend beschriebenen grundsätzlichen Prozessabläufe bei einer synchronen Signalübertragung entsprechend anwendbar sind.

Es ist ferner anzumerken, dass das beschriebene Verfahren insgesamt zur Segment-Initialisierung verwendet wird und Ortungsobjekte daher eine aktive Teilnahme an der Kommunikation erst nach Abschluss dieser Initialisierungsphase aufnehmen können bzw. dürfen. Die Aufnahme einer aktiven Teilnahme erfolgt durch eine Anmeldung im entsprechenden Netzwerksegment, im Anschluss an die Segment-Initialisierung.

In diesem Ausführungsbeispiel wird zudem davon ausgegangen, dass ein in Figur 1 gezeigtes, grundlegend funktionsfähiges Lokalisierungsnetzwerk nach folgender Definition vorliegt, d.h. die Referenzknoten und der Administrationsknoten sind in der Lage, UWB-Funksignale auszusenden und haben eine gültige UID.

Die für die im folgenden gebildeten Daisy Chains genannte Zahl von fünf Referenzknoten je Chain ist nur beispielhaft und kann jeden beliebigen Zahlenwert größer oder kleiner 5 annehmen, wobei die Gesamtzahl an Referenzknoten bei der zweidimensionalen oder quasi-dreidimensionalen Lokalisierung eines Ortungsobjekts mittels Trilateration jedenfalls bevorzugt >= 3 sein sollte. Bei einer eindimensionalen Lokalisierung bzw. Ortung eines Ortungsobjekts entlang einer Linie genügt eine Gesamtzahl >= 2 an Referenzknoten. Es ist jedoch hervorzuheben, dass im Falle einer reinen Anwesenheitserfassung eines Ortungsobjekts ("nulldimensionale Ortung") oder wenn die Lage bei der eindimensionalen Ortung auf eine Halbachse reduziert werden kann, deren Beginn der Referenzknoten darstellt, auch die Verwendung von insgesamt nur einem Referenzknoten möglich ist. Die zwei Daisy Chains können zudem auch unterschiedliche Anzahlen an Referenzknoten enthalten. Allerdings ist ein symmetrischer Aufbau aus Sicht der Ressourceneffizienz und maximalen Messgeschwindigkeit im späteren Messbetrieb zu bevorzugen. Die Referenzknoten aus der Daisy Chain C1 werden im Folgenden mit den in Figur 1 enthaltenen Zahlen ,11' bis ,15', die Referenzknoten aus der Daisy Chain C2 mit den Zahlen ,21' bis ,25' bezeichnet.

Wie in Figur 2a zu ersehen, befinden sich zu Beginn der Initialisierung alle Teilnehmer 200, 215 - 235 sowie 240 - 260, mit Ausnahme des Administrationsknotens 210, in einem sogenannten "ALOHA"-Modus. Die Kommunikation im ALOHA-Modus erfolgt dabei auf Basis eines "Listen-before-Talk"-Verfahrens mit zusätzlicher stochastischer Telegramm-Kommunikation. Im speziellen hier gegebenen Fall sind die Teilnehmer, mit Ausnahme des Administrationsknotens, in einer Wartestellung, in der sie zunächst nur die verschiedenen Broadcast-Kanäle abhören und keine eigenen Nachrichten versenden. Dabei sendet jeder Administrationsknoten, d.h. in dem vorliegenden Netzwerksegment der Administrationsknoten 210, Initialisierungskommandos zusammen mit Informationen zur Netzwerktopologie und dem Konfigurationszustand des Administrationsknotens aus, die vor allem für die Referenzknoten in seinem eigenen Segment bestimmt sind und insbesondere auch für spätere Abstandsmessungen erforderlich sind. Die Informationen zur Netzwerktopologie umfassen die Anzahl und SIDs der im Netzwerk konfigurierten Segmente, die UIDs aller im Lokalisierungsnetzwerk vorhandenen Referenzknoten sowie deren Zuordnung zum jeweiligen Segment. Zusätzlich zur UID wird den Referenzknoten in ihrem eigenen Segment eine vorläufige LID vergeben. Die Information zum Konfigurationszustand des Administrationsknotens besteht vornehmlich aus Informationen zu dessen Firmwarestand.

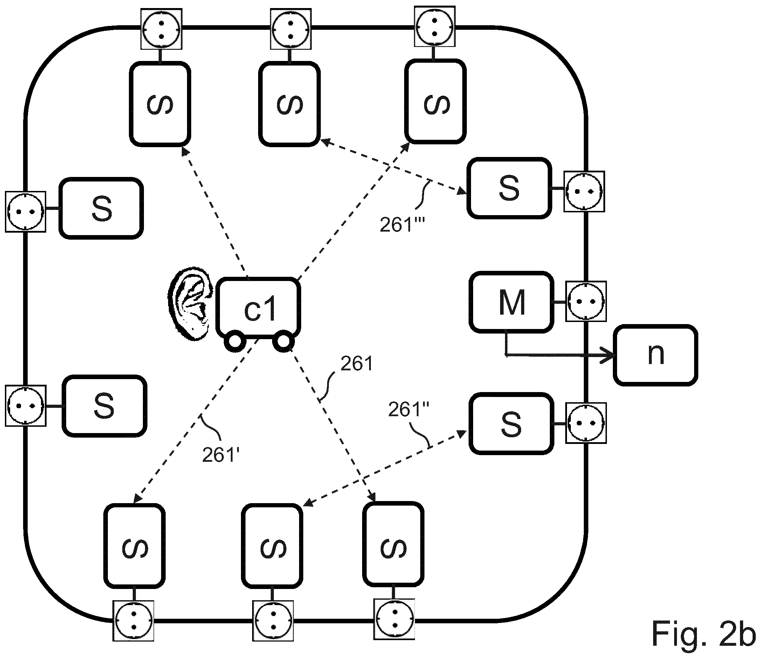

Die Referenzknoten 215 - 260 wechseln dabei solange durch die verschiedenen möglichen Broadcast-Kanäle, bis sie aus einem Broadcast eines beliebigen Segments initiale Informationen darüber empfangen, ob und in welchem Segment sie ein Referenzknoten sind oder nicht. Gegebenenfalls wechseln sie auf den Broadcast-Kanal des Segments, in dem sie als Referenz angegeben sind, um im richtigen Segment an der Netzwerkinitialisierung teilzunehmen. Nach dem sie ihre vorläufige LID in ihrem Zielsegment angenommen haben, nehmen die Referenzknoten an der Kommunikation 261, 261', 261" sowie 261"' in ihrem Segment unter Wiederholung der Initialisierungskommandos und -information des Administrationsknotens bei gleichzeitiger Abstandsmessung zu beliebigen Referenzknoten in ihrem Segment teil, wie in Figur 2b zu ersehen. Dabei erstellen die Referenzknoten durch Auswertung der stattfindenden Kommunikation zusätzlich eine Nachbar-Datenbank, mittels derer die beiden Daisy-Chains von den Referenzknoten später autark betrieben werden können. In der Nachbar-Datenbank befinden sich neben dem gemessenen Abstand zu den anderen Referenzknoten auch Informationen über die empfangenen Signalamplituden (V_{Peak}), das Hintergrundrauschen sowie das Zustandekommen bzw. Fehlschlagen von UWB-Verbindungen, mittels derer nachfolgend (kommunikationstechnisch) möglichst stabile Daisy Chains gebildet werden können.

Die oben beschriebene Kommunikation breitet sich dabei lawinenartig im Netzwerk aus. Es ist eine genügend lange Wartezeit notwendig, um sicherzustellen, dass alle Referenzknoten lang genug an diesem chaotischen Kommunikationsprozess teilnehmen können, um eine zuverlässige Datenbasis in der Statistik- und Nachbar-Datenbank zu generieren. Das Ende dieser ersten Initialisierungsphase löst der Administrationsknoten dadurch aus, dass er anstatt des Initialisierungskommandos ein neues Kommando aussendet, welches die Referenzknoten anweist, die jeweils erfasste Statistikdatenbank dem vorliegenden Segment mitzuteilen. In der nun folgenden Kommunikation kann auf gleichzeitig erfolgende Abstandsmessungen verzichtet werden. Dieses Kommando breitet sich wiederum lawinenartig im Segment aus. Referenzknoten wiederholen dieses Kommando wiederum zufällig zusammen mit dem Inhalt ihrer Nachbardatenbank. Abgehörte Nachbardatenbanken von anderen Referenzknoten werden dabei vollständig in die eigene Datenbank integriert und bei erneuter Teilnahme am Kommunikationsablauf wird der aktualisierte Datensatz übertragen. Dies führt dazu, dass nach Ablauf einer gewissen Zeit alle Referenzknoten sowie der Administrationsknoten über die gleiche und aus kommunikationstechnischer Sicht vollständige Information zu den Nachbarschaftsverhältnissen im Netzwerksegment verfügen. Erkennt der Administrationsknoten für eine gewisse Zeit keine Änderung mehr in der Nachbardatenbank oder ist eine gewisse maximale Wartezeit abgelaufen, beendet der Administrationsknoten die beschriebene Verteilung der Nachbar(schafts)datenbank im Netzwerk.

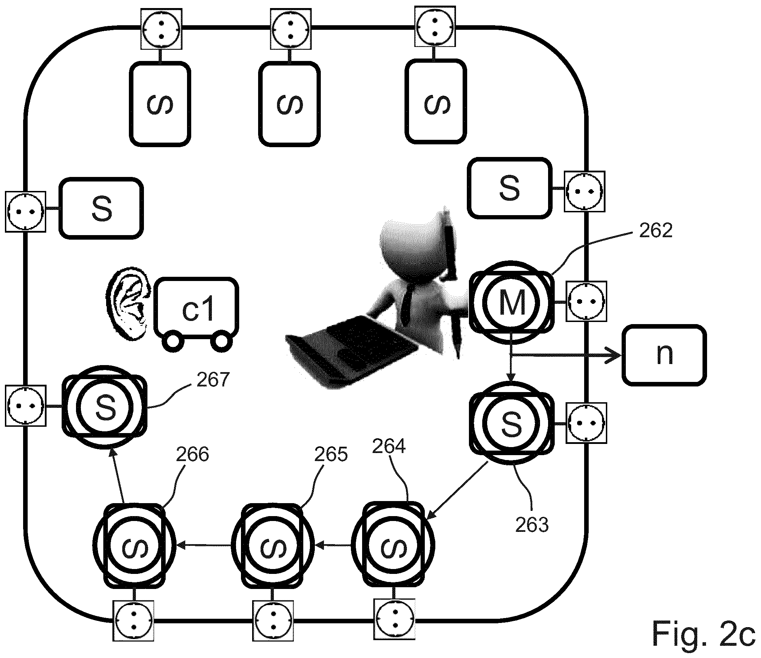

Der Administrationsknoten berechnet aus den erhobenen Informationen mit Hilfe der Nachbardatenbank eine tragfähige Daisy Chain-Struktur. Dabei können verschiedene Gewichtungen für die in der Nachbardatenbank erfassten Statistikinformationen herangezogen werden, die in Summe sicherstellen, dass Informationen zuverlässig und vollständig entlang der Daisy Chain propagiert werden können. Um eine erhöhte Fehlertoleranz zu erreichen, kann z.B. berücksichtigt werden, dass auch übernächste oder überübernächste Nachbarn innerhalb der gebildeten Daisy Chain ebenfalls möglichst zuverlässig direkt miteinander kommunizieren können. Weiterhin kann der Administrationsknoten den Referenzknoten auch eine neue LID zuweisen, die beispielsweise deren Daisy Chain und Position innerhalb dieser kennzeichnet. In Figur 2c ist gezeigt, wie der Administrationsknoten 210 in dem vorliegenden Beispiel die untere Daisy Chain 215 - 235 erzeugt und diese Erzeugung den Referenzknoten innerhalb der Daisy Chain mitteilt. Dabei sendet 262 (wie durch die kreisförmige Wellenausbreitung jeweils angedeutet) der Administrationsknoten 210 an den nächstliegenden Referenzknoten 215 die Chain Setup-Informationen zusammen mit einem Zähler zur Diagnose der Propagation der Nachricht. Dieser Referenzknoten kommuniziert diese Informationen 263 wiederum an den nächsten Referenzknoten 220. Auf diese Weise kommunizieren 264 - 266 auch die beiden darauffolgenden Referenzknoten 225, 230 die Chain Setup-Informationen bis hin zum letzten Referenzknoten 235 der unteren Daisy Chain. Die genannten Chain Setup-Informationen umfassen unter anderem die Chain-Länge sowie entsprechende UIDs und die gegebenenfalls vorhandenen neuen LIDs für die an der Chain beteiligten Referenzknoten. Bemerkt ein Referenzknoten, dass die von ihm versendete Information vom Empfänger nicht weiterverbreitet wird, dann wiederholt er das Versenden des bereits versendeten Datenpakets. Vorteilhaft ist hierbei, dass die untere Daisy Chain auf diesem Wege auch Informationen zur geplanten zweiten Daisy Chain erhalten kann.

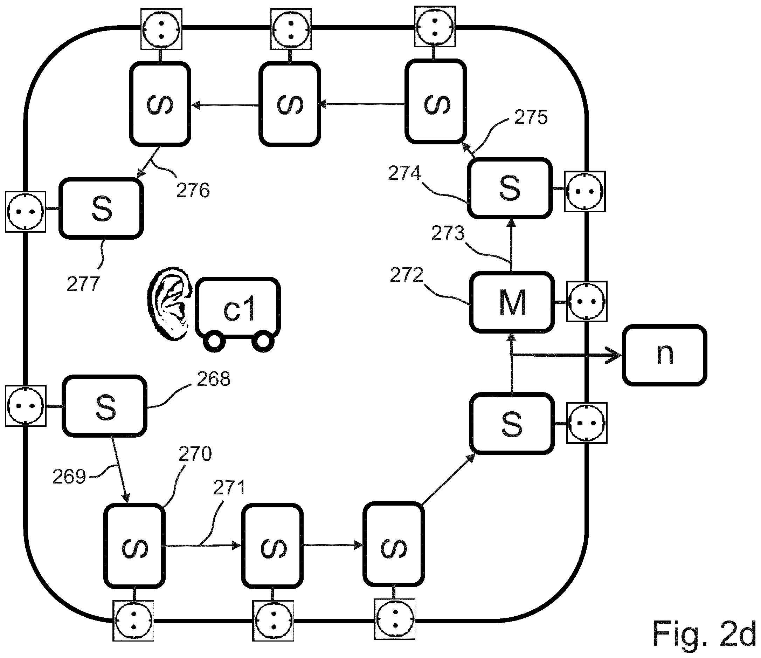

In Figur 2d erfolgt dann, ausgehend von dem letzten Referenzknoten 235 in der unteren Chain, mittels der Referenzknoten ein Rücklauf zur Bestätigung der erfolgreichen DC-Einrichtung bzw. eine entsprechende Propagation an alle anderen Referenzknoten der vorliegenden Daisy Chain, bei dem ein Chain Setup-"Acknowledge" (d.h. entsprechende Akzeptanz bzw. Bestätigung der erfolgten Chain-Erzeugung) einschließlich der Rückgabe von Diagnoseinformation z.B. in Form der jeweiligen LIDs erfolgt. Der Rücklauf startet durch Senden 268 einer entsprechenden Kommunikation 269 an den nächsten Referenzknoten, der wiederum eine entsprechende Kommunikation 271 an den nächsten Referenzknoten sendet 270 usw. Konnte die Daisy Chain nicht gebildet werden, da der in Figur 2c dargestellte Broadcast nicht weit genug verteilt bzw. weiterverteilt werden konnte, erfolgt der beschriebene Rücklauf von dem Referenzknoten aus, der die Broadcast-Information zuletzt weiterverteilt hatte. Die Diagnoseinformation im Chain-Setup-"Acknowledge" kann dann vom Administrationsknoten gegebenenfalls zur Generierung einer besseren Daisy Chain (nachfolgend auch als "DC" abgekürzt) genutzt werden.

Der Administrationsknoten 210 wiederholt das in den voranstehenden beiden Absätzen beschriebene Vorgehen zur Ausbildung der oberen DC. Dies ist mit einer Kommunikation entlang der Pfeile 273 - 277 angedeutet, welche die Bildung der DC aus den Referenzknoten 240 - 260 darstellt. Auch entlang dieser neuen, zweiten DC wird abschließend ein Chain Setup-"Acknowledge" analog zum oben beschriebenen Vorgehen an den Administrationsknoten zurück gesendet. Somit ist im gesamten Segment die Bildung der beiden Chains erfolgt und abgeschlossen.

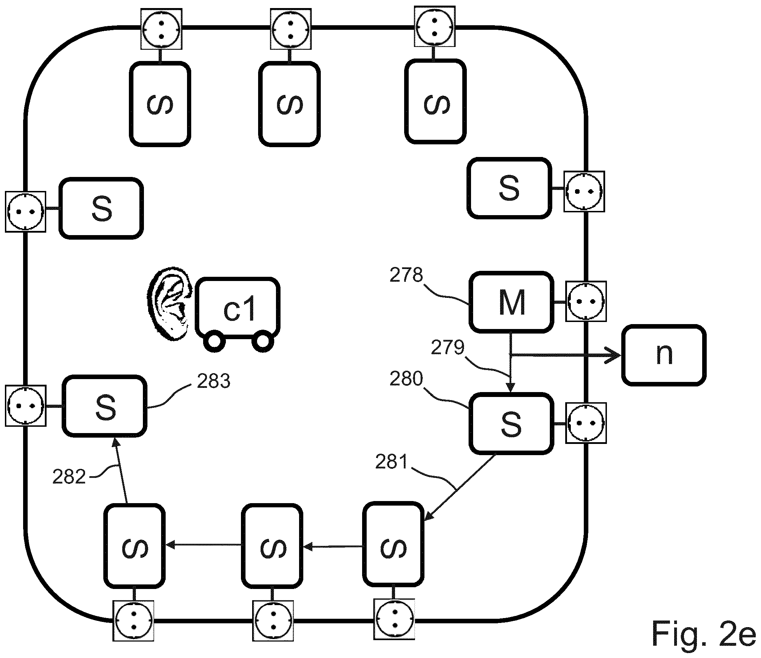

Anschließend erhalten die Referenzknoten nun einen vollständigen Datensatz zur Beschreibung des Netzwerks. Dies ist in Figur 2e abgebildet. Dazu überträgt der Administrationsknoten wiederum mittels Forward Broadcast 278 Informationen entlang der unteren Daisy Chain, wie durch die Pfeile 279, 281 und 282 angedeutet. Dabei wiederholen die Referenzknoten den jeweiligen, vollständig empfangenen Informationsinhalt. Der Datensatz zur Beschreibung des Netzwerks enthält dabei typischerweise einen vollständigen Almanach mit den bekannten Positionen aller Referenzknoten im gesamten Lokalisierungsnetzwerk. Zusätzlich können weitere Informationen zum gewählten Koordinatensystem (Koordinatentransformation, Rotation) und zu logischen Räumen mitgeteilt werden. Die Informationen müssen aufgrund der Datenmenge auf mehrere Datenseiten aufgeteilt werden. Wie bei der Bildung der Daisy Chains erfolgt vom Ende der Daisy Chain oder vom letzten, erreichten Teilnehmer aus eine Bestätigung der erfolgreichen Informationsvermittlung über ein rücklaufendes Daten und Diagnose-Diagramm.

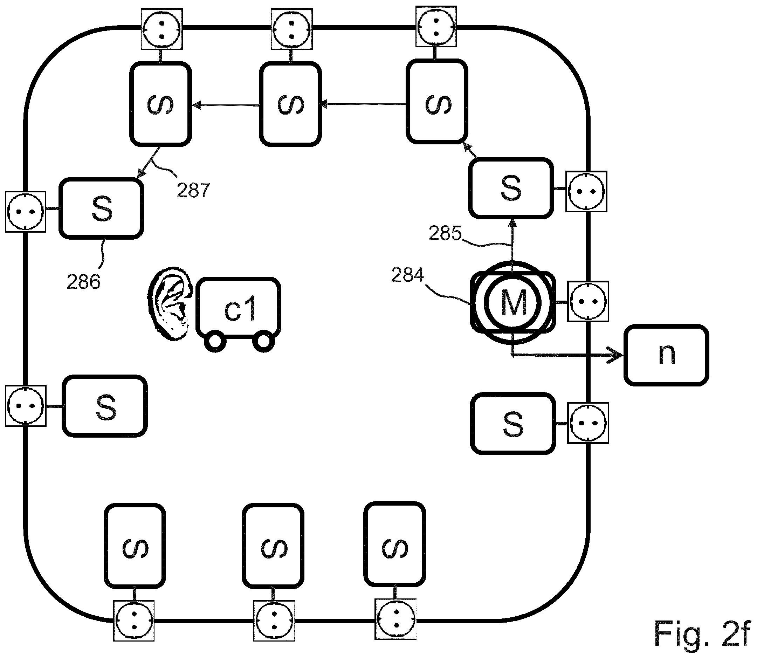

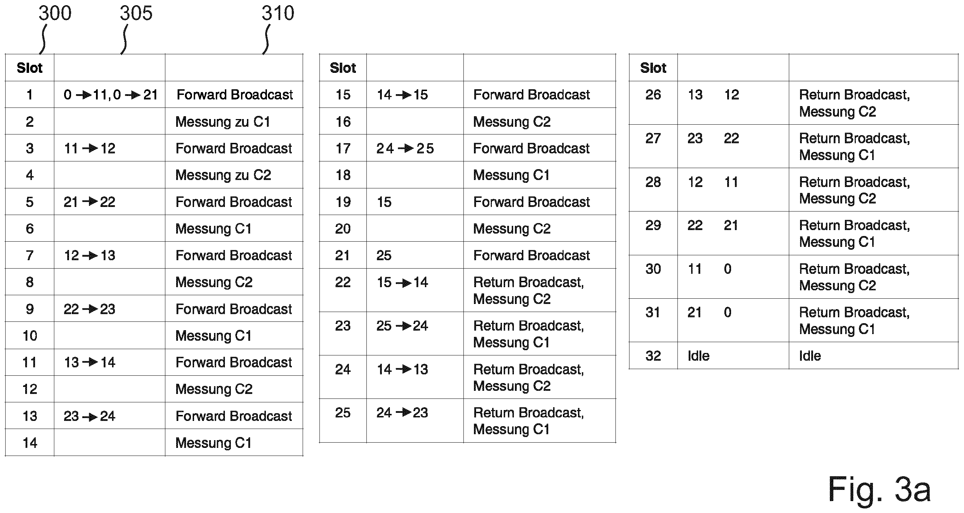

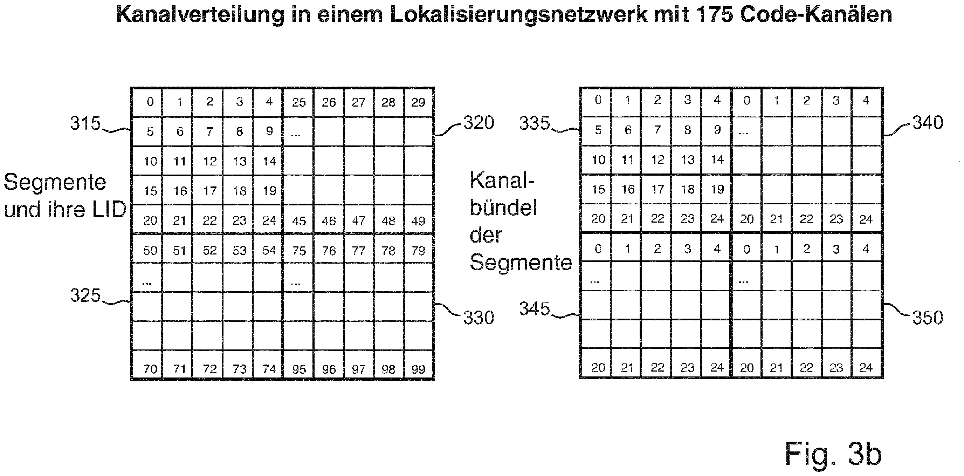

Die Referenzknoten generieren direkt nach dem Versand der Diagnose-Informationen die in Figur 3 dargestellte TDMA Slot Map und warten auf den Start der synchronen Kommunikationsphase durch den Administrationsknoten. Zunächst aber erfolgt der gleiche Ablauf der eben beschriebenen Informationsverteilung wie in Figur 2f ebenfalls für die zweite (obere) DC dargestellt ist. Wiederum startet der Broadcast 284 beim Administrationsknoten und die Informationen werden dann, wie mit den Pfeilen 285 und 287 angedeutet, entlang der DC bis zum letzten Referenzknoten verbreitet. Von dort aus erfolgt ebenfalls ein rücklaufender Broadcast 286 entlang der DC zurück zum Administrationsknoten. Auch in der oberen DC wechseln die Referenzknoten in den synchronen Kommunikationsmodus, und zwar auf Basis der in Figur 3 dargestellten TDMA Slot Map.

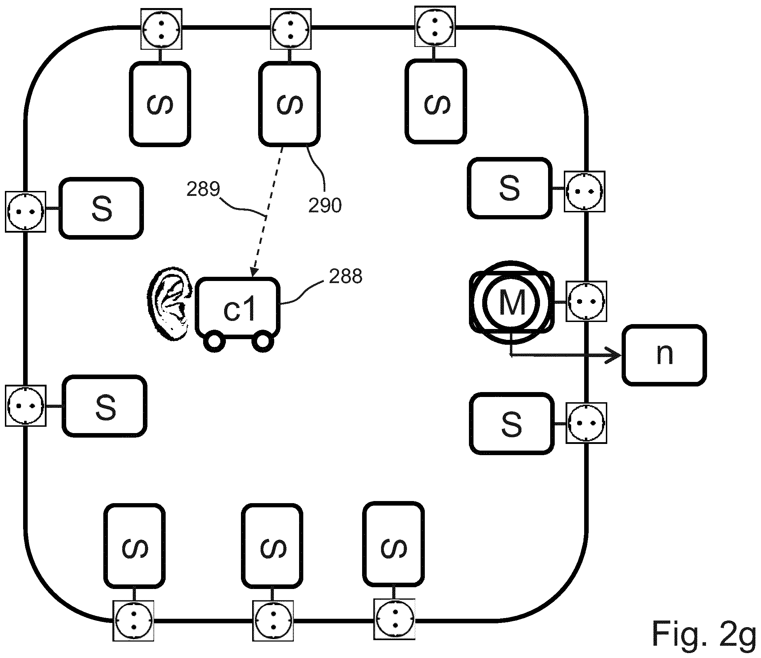

Mit dem beschriebenen Durchlauf der Netzwerk-Informationen ist die Initialisierungsphase des vorliegenden Netzwerksegments beendet. Nach dem Erhalt des letzten, noch rücklaufenden Broadcast-Pakets aus der oberen DC wechselt auch der Administrationsknoten in den synchronen Kommunikationsmodus und beginnt nach einer kurzen Wartezeit die TDMA-Kommunikation durch Verbreiten eines Broadcasts, wie im in der Figur 3a gezeigten ersten Slot dargestellt. Dieser Broadcast gibt die erfolgreiche Segment-Initialisierung allen Teilnehmern bekannt. Von diesem Zeitpunkt an kann sich das Ortungsobjekt 288 über die in Figur 2g exemplarisch dargestellte Kommunikation 289 mit einem beliebigen Referenzknoten 290 im vorliegenden Netzwerksegment anmelden.

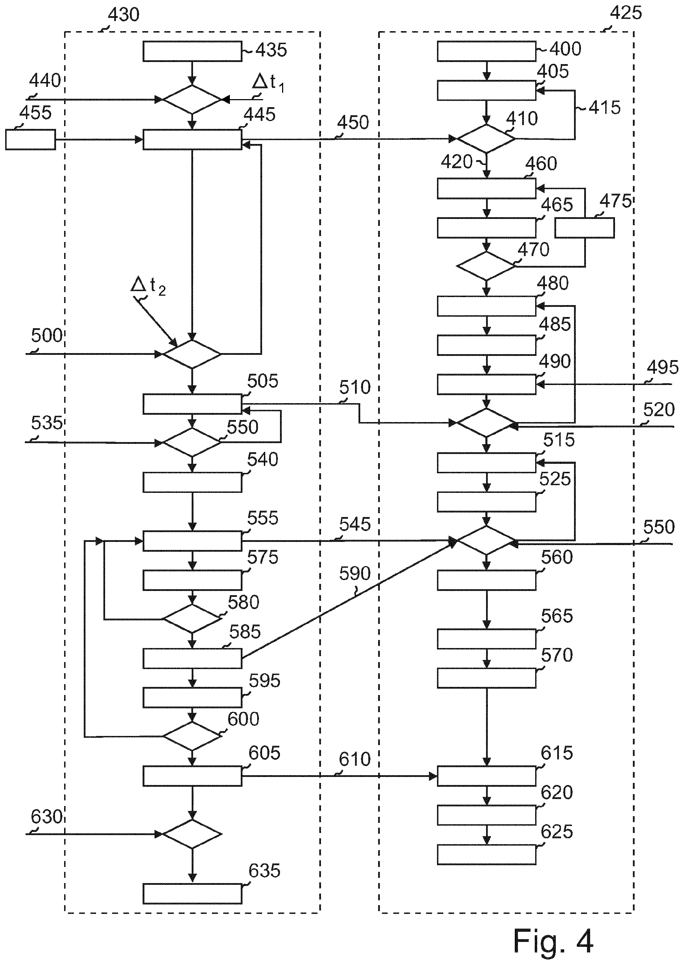

Das oben beschriebene Ausführungsbeispiel der Initialisierung eines hier betroffenen, aus wenigstens zwei Segmenten aufgebauten Lokalisierungsnetzwerks (siehe Figur 1 für ein einzelnes Segment) wird nachfolgend anhand eines in Figur 4 gezeigten Flussdiagramms beschrieben und erfolgt, indem parallel oder sequentiell die Initialisierung der einzelnen Netzwerksegmente stattfindet. Im Folgenden wird nur die Initialisierung eines einzelnen Netzwerksegments beschrieben, jedoch erfolgt diese für alle Segmente, aus denen das Lokalisierungsnetzwerk besteht, gleichartig. Gleichzeitig wird zunächst nur die Initialisierung der zur Kommunikationsinfrastruktur gehörenden Komponenten, d.h. vorliegend von Administrationsknoten und Referenzknoten, explizit beschrieben. Für Ortungsobjekte erfolgt die Initialisierung allerdings identisch zu der von Referenzknoten, ausgenommen wenn explizit auf ein abweichendes Verhalten hingewiesen wird. Netzwerksegmente können eine solche Initialisierung zu einem beliebigen Zeitpunkt durchlaufen. Insgesamt bildet die Darstellung in Figur 4 und der im folgenden Text beschriebene Ablauf genau das gleiche Verhalten ab wie oben anhand der Figuren 2a - 2g beschrieben. Bisher standen dabei die Kommunikationspfade zwischen den Kommunikationsteilnehmern im Zentrum der Beschreibung. In der folgenden Beschreibung soll nun der sequentielle Ablauf klargestellt werden und mit dem Kommunikationsablauf zwischen den Kommunikationspartnern durch Verweis auf die vorstehend beschriebenen Figuren verknüpft werden.

Der initiale Zustand bzw. Anfangszustand ist aus Sicht der Referenzknoten, wie bereits beschrieben, dadurch charakterisiert, dass diese sich in einem sogenannten "ALOHA"-Broadcast-Modus befinden 400, in dem in an sich bekannter Weise ein "Listen-before-Talk"-Verfahren mit stochastischer Telegramm-Kommunikation vorgesehen ist, allerdings unter Abschaltung der eigenen Sendefunktion. Die Referenzknoten wechseln 405, 410, 415 nur zwischen möglichen, zur Verfügung stehenden Broadcast-Kanälen, um zu erkennen auf welchen Kanälen eine Kommunikation in dem vorliegenden Beispiel über UWB-Funktechnik stattfindet. Gemäß einer anderen Ausgestaltung setzen die Referenzknoten sehr kurze Datenpakete auf einem gewählten Broadcast-Kanal in das UWB-Netzwerk ab, die ihre grundlegende Anwesenheit bekannt geben. Dies ist besonders von Vorteil, sobald sie eine Kommunikation auf dem gewählten Broadcast-Kanal vorgefunden 420 haben. Die gestrichelte Linie 425 deutet an, dass die beiden Schritte 405, 410 und 415 und alle im Bereich der Umrahmung durch die gestrichelte Linie 425 folgenden Schritte von den Referenzknoten ausgeführt werden. Die Situation ist vergleichbar mit dem in Figur 2a gezeigten Verhalten der Teilnehmer.

Die in Figur 4 dargestellte, gestrichelte Linie 430 zeigt an, dass die darin enthaltenen Schritte von dem Administrationsknoten ausgeführt werden. Der Administrationsknoten wird auf dieselbe Weise wie die Referenzknoten in einen initialen Zustand versetzt 435. Verfügt der Administrationsknoten, wie bei Figur 1 erwähnt, über keine Datenverbindung zu einer Datenverarbeitungsanlage oder einen Steuerrechner, der den Kommunikationsbeginn auslöst 440, beginnt er nach einer vorgebbaren Wartezeit Δt1 mit der Kommunikation ebenfalls in dem genannten "ALOHA"-Modus, und zwar durch ein Versenden 445 von Initialisierungsdatenpaketen an die Referenzknoten (beispielhaft dargestellt durch den Pfeil 450). Hat der Administrationsknoten noch keine Referenzknoten in seinem Umfeld erkannt, da diese zu Beginn der Initialisierung noch stumm sind, wendet er sich an eine Zieladresse eines "virtuellen" Referenzknotens. Verfügt der Administrationsknoten über eine Verbindung zu einem IT-System, können entsprechende Initialisierungspakete auch, ausgelöst durch die Aufforderung 440 des IT-Systems, bereitgestellt werden.

Die vorgenannten Initialisierungspakete bestehen aus einer Lokalisierungsmessanforderung an einen beliebigen Teilnehmer (Referenzknoten), aus einem Kommando, welches die Segment-Initialisierung signalisiert, und enthalten zusätzlich weitere Daten, welche die Netzwerktopologie beschreiben, sowie den Konfigurationszustand des Administrationsknotens. Unter diesen Daten können in einer möglichen Ausgestaltung auch Informationen zur verwendeten Firmware, zur Anzahl der im Netzwerk vorhandenen Segmente und deren SIDs, die genannten UIDs der Referenzknoten im Segment und/oder im gesamten Lokalisierungsnetzwerk, sowie die Zuordnung dieser Referenzknoten zu den jeweiligen Segmenten gehören. Die Zusammenstellung dieser Informationen setzt voraus, dass der Administrationsknoten über ein Lagebild zur Topologie des Lokalisierungsnetzwerks verfügt. Dieses Lagebild kann er über eine Kommunikation mit einem IT-System erhalten oder anhand von in einem eigenen Festspeicher abgespeicherten Konfigurationsinformationen erhalten 455. Für die Referenzknoten, die einem vorliegenden Netzwerksegment angehören, kann bereits eine vorläufige, genannte LID vergeben werden und mittels der Initialisierungspakete kommuniziert werden. Gegebenenfalls können die gesamten, vorgenannten Informationen auch in mehrere Datenpakete aufgeteilt werden, wobei die Datenpakete zusätzlich mit Seitennummern identifizierbar gemacht werden. Dabei müssen nicht alle Seiten der Initialisierungspakete an jeden möglichen Teilnehmer im Segment direkt gesendet werden, da es auch ausreicht, wenn die Teilnehmer die Gesamtzahl der verschiedenen Seiten im Rahmen des genannten Broadcasts aus der Kommunikation der anderen Teilnehmer mithören können.

Beim Versenden dieser Initialisierungspakete durch den Administrationsknoten sind anfangs alle Referenzknoten im Netzwerk damit beschäftigt, durch die vorhandenen Broadcast-Kanäle des Netzwerks zu wechseln 405, 410 und 415. Sobald sie die Initialisierungspakete eines beliebigen Administrationsknoten abhören 450, beenden sie 420 diesen Kanalwechsel und arbeiten im eingestellten Broadcast-Kanal weiter. Zur Sicherung der Kommunikationseigenschaften kann der Kanalwechsel bei einem zu geringem Signal-zu-Rausch-Verhältnis weiterhin stattfinden, und zwar solange (gemäß der gezeigten Prozessschleife 405, 410, 415), bis die Initialisierungspakete mit einem besseren Signal-zu-Rausch-Verhältnis abgehört werden können. In diesem Fall sind dies die Initialisierungspakete eines Administrationsknotens aus einem anderen Netzwerksegment. Ist ein Referenzknoten funktechnisch in einem sehr abgeschatteten Bereich angeordnet, dann kann, anstelle der Initialisierungspakete 450 eines Administrationsknotens, auch der Empfang der wie nachfolgend beschrieben weiterverbreiteten, wiederholten und von einem beliebigen anderen Referenzknoten ausgesendeten Initialisierungspakete zu einem nachfolgend beschriebenen Verhalten führen.

Durch Verarbeitung 465 der so empfangenen 460 Initialisierungspakete erhalten erste Referenzknoten die notwendigen Informationen über die Segmentierung des Netzwerks und welche Referenzknoten welchem Segment zugeordnet sind, egal ob sie den Broadcast-Kanal ihres Ziel-Segments eingestellt haben oder nicht. Insbesondere bekommen sie an dieser Stelle tatsächlich erst die Information, dass sie Referenzknoten sind und keine Ortungsobjekte. Ortungsobjekte erkennen ihre Klassifizierung daran, dass ihre UID nicht in den Informationen der Initialisierungspakete zur Netzwerkstruktur enthalten ist. Sie bleiben passiv, bis der gesamte Konfigurationsvorgang des gewählten Netzwerksegments abgeschlossen ist. Sie hören aber jeden einzelnen beschriebenen Kommunikationsvorgang als passive Teilnehmer ab und verarbeiten die kommunizierten Daten.

Ergibt ein von einem Referenzknoten beim Abhören der Initialisierungspakete zusätzlich durchgeführter Prüfschritt 470, dass der Broadcast-Kanal eines Netzwerksegments eingestellt wurde, dem der Referenzknoten nicht zugeordnet ist, wechselt 475 der Referenzknoten in den Broadcast-Kanal des richtigen Zielsegments, dem er zugeordnet ist. Haben die Referenzknoten im richtigen Segment Informationen über ihre vorläufige LID mitbekommen 480, verlassen sie den passiven ALOHA-Modus unter Verwendung dieser LID. Dieses Verhalten ist alternativ auch in Figur 2b und dem entsprechenden Beschreibungstext dargestellt. Die Referenzknoten geben 485 zum einen ihr Vorhandensein im Segment über den Broadcast-Kanal bekannt. Zum anderen wiederholen die Referenzknoten in Kombination mit einer Lokalisierungsmessung zu allen anderen im betreffenden Segment bereits erkannten Referenzknoten oder dem Administrationsknoten, die bisher vom Administrationsknoten empfangenen Informationen über die Struktur des Netzwerks. Dies stellt sozusagen in einem "Lawineneffekt" sicher, dass nun auch alle anderen Referenzknoten im Segment die Informationen des Administrationsknoten erhalten können, falls z.B. in stark gestörten Umfeldern eine Funkabschattung existiert. Zudem wird dadurch erreicht, dass Referenzknoten nicht in ein anderes Segment abwandern können.

Neben den beschriebenen Abstandsmessungen und der Datenkommunikation führen 490 die Referenzknoten eine Statistik darüber, von welchen Referenzknoten im eigenen Segment eine Kommunikation 495 gehört werden konnte, unter welchen Signal- und Störsignalpegeln und wie oft eine Abstandsmessung zu einem jeweiligen Referenzknoten funktioniert hat oder fehlgeschlagen ist. Zur Fehlerdiagnose können noch weitere Daten erfasst werden, u.a. auch die Anzahl und oder eine Liste an erfolgreich empfangenen Initialisierungspaketseiten. Diese Wiederholung erfolgt so lange, bis der Administrationsknoten durch Kommunikation bzw. Aussendung eines weiteren Kommandos via UWB das Ende der Initialisierungsphase ankündigt.

In einer anderen Ausgestaltung des Verfahrens können die Referenzknoten auch über eine "a priori"-Konfiguration darüber informiert werden, dass sie Referenzknoten darstellen und/oder welchem Netzwerksegment sie zugeordnet sind. Dann kann auf einen Kanalwechsel verzichtet werden. Die Initialisierungsphase kann so deutlich verkürzt werden, da den Referenzknoten nur ihre vorläufige LID mitgeteilt werden und eine hinreichende Datenbasis für die voranstehend beschriebene Statistikinformation erreicht werden muss.

Zur zuverlässigen Initialisierung eines Segments und um sicherzustellen, dass alle Referenzknoten die notwendige Initialisierungsinformationen erhalten, muss die Zeitdauer Δt2, die der Administrationsknoten abwartet, bis er die nächste Kommunikationsphase einleitet, hinreichend lang sein. Die Länge dieses Zeitraums Δt2 kann dabei fest konfiguriert sein, über einen Steuerrechner oder eine Datenverarbeitungsanlage gesteuert werden oder der Ablauf des Zeitraums durch ein externes Signal oder via UWB mitgeteilt werden 500.

Die Initialisierungsphase wird nach den oben beschriebenen Bedingungen für den Administrationsknoten von diesem beendet 505, und zwar in dem vorliegenden Ausführungsbeispiel durch Versenden eines Kommandos 510. Durch dieses Kommando fordert er die Referenzknoten auf, mit dem Verteilen der Initialisierungspakete aufzuhören und stattdessen ihre Statistik über die Kommunikation mit den anderen Teilnehmern dem Netzwerk zur Verfügung zu stellen 515, wobei auch der Verzicht von Abstandsmessungen zu Gunsten einer reinen Datenkommunikation vorgesehen sein kann. Dabei werden zudem die oben genannten von den Referenzknoten erhobenen Informationen zu abgehörten Teilnehmern, Signalstärken usw. wiederum als Datenpakete verpackt und versendet 515, z.B. in Form einer XML-Zeichenkette ("XML-String") oder in einem textbasierten oder binären Austauschformat. Dieser Statistikaustausch 515 erfolgt unter Wiederholung des Kommandos, welches der Administrationsknoten verschickt hat und welches das Ende der Initialisierungsphase bekannt gibt. Kann ein Referenzknoten den Administrationsknoten auf direktem Wege nicht hören, erfährt er zumindest auf diese Weise 520 vom Ende der Initialisierungsphase. Die Referenzknoten verarbeiten 525 die so über das Broadcast-Signal abgehörten Statistikdaten zur Nachbarschaftssituation und ergänzen so ihre eigene Datenbank. In weiteren Kommunikationspaketen wird dem gesamten Segment schließlich immer diese aktualisierte und kombinierte Statistikdatenbank zur Verfügung gestellt. Im Ergebnis haben alle Referenzknoten inklusive dem Administrationsknoten übereinstimmende Informationen über die Kommunikationseigenschaften im Netzwerk.

Nach Beendigung der Statistikerhebung 530, z.B. nach einer empirisch vorgebbaren Wartezeit, welche von einem externen Datenverarbeitungssystem, über UWB oder ein anderes Signal 535 ausgelöst wird, oder wenn sich die Statistikdatenbank über einen längeren Zeitbereich nicht mehr verändert hat, bildet 540 der Administrationsknoten oder ein mit diesem verbundenes IT-System aus den Informationen der Segment-Statistik eine tragfähige Segmentstruktur in Form funktionierender Daisy Chains. Das Verhalten wird auch in Figur 2c und der entsprechenden Beschreibung gezeigt. Bevorzugt werden dabei zwei Ketten aus Referenzknoten, die einen möglichst zuverlässigen Datenaustausch gewährleisten, gebildet. Die beiden Chains sind möglichst gleich lang. Alternativ können die Ketten auch durch eine Ringstruktur, eine Sternstruktur oder eine in anderer Weise verästelte Struktur gebildet werden, sofern wenigstens lokal eine linienförmige Verbindung zwischen zwei Referenzpunkten gebildet wird.

Auch die Referenzknoten können optional nach einiger Zeit, in der sie keine Änderung der Statistikdatenbank mehr erkennen, automatisch deren Verteilung beenden. Ein Ende des Funkverkehrs zwischen den Referenzknoten kann aber auch mit der Verteilung der Informationen zur Daisy Chain durch den Administrationsknoten 545 oder die anderen Referenzknoten 550 nach dem nachfolgend beschriebenen Schema erfolgen.

Nach der Generierung der Daisy Chains teilt 555 der Administrationsknoten der ersten Chain diese Verknüpfung zusammen mit einem Kommando, das die Konstruktion der ersten Daisy Chain anordnet, mit. Das Verhalten des Netzwerks ist wiederum in Figur 2c dargestellt. Diese erste Kette wird im Folgenden mit C1 bezeichnet. Die verwendete Nachricht enthält unter anderem die Länge der Chain C1, einen Zähler, sowie die UIDs und endgütigen LIDs der Referenzknoten in der Reihenfolge, wie sie in der Chain C1 nacheinander folgen. Die Nachricht wird vom Administrationsknoten zunächst an den ersten Referenzknoten der Chain C1 gesendet 545 bzw. an diesen adressiert. Der erste Referenzknoten wechselt auf die für ihn vorgesehene LID 560 inkrementiert den Zähler im Datenpaket und bestätigt dem Versender den Empfang des Pakets. Danach versendet 565 er das empfangene Datenpaket mit inkrementiertem Zähler an den nächstfolgenden Teilnehmer in der Daisy Chain. Es ist anzumerken, dass der beschriebene Quittierungsvorgang und der Weiterversand einer Daisy Chain-Information auch in einem einzigen Schritt geschehen können. Erhält der Versender keine Bestätigung über den Erhalt der Chain-Information, wiederholt er die Versendung des Pakets.

Hat schließlich der letzte Referenzknoten in der Chain C1 die Information zur Kette erhalten und die richtige LID angenommen, beginnt er mit dem Versand eines rücklaufenden Datenpakets, das die Akzeptanz und korrekte Bildung der Daisy Chain bestätigt. Die Bestätigung wird entlang der Daisy Chain rückwärts 570 zum Administrationsknoten hin übermittelt 575. Das Datenpaket enthält neben der Akzeptanzbestätigung die gesamte Kette der LIDs der Teilnehmer, über die das Datenpaket weiterverteilt wurde. Sender und Adressat sind auch in diesem rückwärtslaufenden Paket eindeutig gekennzeichnet.

Ist die Daisy Chain aus irgendeinem Grund unterbrochen, beginnt alternativ der Referenzknoten, der zuletzt entlang der Daisy Chain erfolgreich seine Daisy Chain Information erhalten, aber keine Bestätigung aus dem Weiterversand bekommen hat, mit dem Versand des rücklaufenden Akzeptanzpakets. Der Administrationsknoten kann dann entscheiden 580, ob die Chain "hinreichend" korrekt gebildet wurde, ob unter Umständen eine andere Chain-Konfiguration gewählt werden muss oder ob sich das Lokalisierungssegment in einem Fehlerzustand befindet. Konnte die Chain korrekt gebildet werden, oder entscheidet der Administrationsknoten trotz fehlerhafter Chain-Bildung, den Segmentkonfigurationsprozess fortzusetzen, fährt er 585 damit fort, dasselbe Verfahren das zur Bildung der Chain C1 verwendet wurde auf die zweite Chain C2 anzuwenden 590. Dies ist ebenfalls in Figur 2d dargestellt. Auch aus der Bildung dieser Chain erhält der Administrationsknoten wieder eine Rückmeldung 595 über die Akzeptanz der Daisy Chain. Auch auf Basis dieser Rückmeldung muss der Administrationsknoten wiederum entscheiden 600, ob insgesamt eine tragfähige Kommunikationsstruktur im Netzwerksegment entstehen bzw. gebildet werden konnte.

Es ist anzumerken, dass bei Vorliegen einer ringförmigen Verkettung (ringförmige Daisy Chain) auf das genannte rücklaufende Paket bei erfolgreicher Chain-Bildung verzichtet werden kann, da der Administrationsknoten wiederum das Ende der "Kette" bildet. Dennoch kann auch bei einer solchen Kette ein rücklaufendes Paket, das den Erfolg des Prozesses ausdrückt, für die Fehlertoleranz von Vorteil sein. Bei noch anderen Strukturen der Verkettung kann über verkettete Abbildung der Nachbarschaftsstruktur eine ähnliche Initialisierung erreicht werden. Die Datenpakete werden dann umfangreicher, ebenfalls die Generierung der Akzeptanzinformation.

Es ist ferner anzumerken, dass die Berechnung der Daisy Chains auch parallel auf allen Referenzknoten gleichzeitig stattfinden kann. Unter Verwendung klarer Hierarchisierungs- und Priorisierungsregeln sowie unter Sicherstellung des Vorhandenseins einer identischen Nachbarschafts- und Statistikdatenbank in allen Referenzknoten des Segments kann dann auch eine gleichartige Daisy Chain-Struktur bei paralleler, isolierter Berechnung erreicht werden.

Nach Abschluss der Konfiguration der Daisy Chains beginnt der Administrationsknoten 605 weitere Informationen, die er über die Topologie des Gesamtnetzwerks hat, zunächst entlang der Kette C1 zu kommunizieren bzw. zu verteilen 610. Diese Informationen bestehen aus Informationen zur Transformation des gewählten Koordinatensystems in andere Koordinatensysteme, einer Almanach-Liste (der sogenannte "Almanach"), sowie weiteren Informationen, die die Ortung im Lokalisierungsnetzwerk oder eine Netzwerkdiagnose betreffen. Eine genannte Almanach-Liste umfasst die im gesamten Netzwerk vorliegenden Referenzknoten und deren jeweilige Position im Raum. Zusätzlich umfasst die Liste Informationen über jeden Teilnehmer, und zwar eine eindeutige, von der jeweiligen Position im Netzwerk unabhängige Identifizierungskennung ("UID") des Teilnehmers im Netzwerk, z.B. eine an sich bekannte "MAC-ID". Diese Information kann wiederum auf mehrere Seiten fester Länge verteilt werden. Der Administrationsknoten übermittelt die Information an den ersten Referenzknoten der Kette C1, er bekommt für jede übermittelte Datenseite eine Bestätigung. Ist der Vorgang mit Versand aller Seiten abgeschlossen, versendet der adressierte Knoten 615 wiederum dieselbe Information im gleichen Verfahren an den nächsten Knoten der Chain und so fort. Dieser Kommunikationsprozess wird wiederholt, bis der letzte Referenzknoten in der Kette C1 die volle Netzwerkinformation erhalten hat. Von dort wird rücklaufend 620 entlang C1 der Erhalt der Netzwerkinformation nochmals gesondert quittiert, ähnlich dem Vorgang bei Ausbildung von C1. Die entsprechenden Schritte 605, 610, 615 und 620 werden dann für C2 wiederholt. Dieses Verhalten ist in Figur 2f abgebildet. Für andere Daisy Chain-Topologien ergeben sich ähnlich geartete Broadcast-Strategien.

Nach Erhalt und Weiterversand des Bestätigungspakets durch den jeweiligen Referenzknoten generiert dieser 625 eine tabellarisch in Figur 3a gezeigte, exemplarische TDMA-Slot Map für ein Lokalisierungssegment, zunächst ohne aktive Teilnehmer. Der Referenzknoten wechselt dabei in den TDMA-Modus. Nach Erhalt der Konfigurationsbestätigung aus C2 nach voranstehendem Absatz wartet der Administrationsknoten für eine festgelegte Zeit, bevor er dem Netzwerk oder Segment die erfolgreiche Kommunikation und vollständige Initialisierung durch ein gesondertes Kommando bekannt gibt. Die Länge dieses Zeitraums kann dabei fest konfiguriert sein, über einen Steuerrechner oder eine Datenverarbeitungsanlage vorgegeben werden oder der Ablauf des Zeitraums kann durch ein externes Signal oder via UWB mitgeteilt werden 630. Er generiert dann selbst eine TDMA-Slot Map, welche identisch ist mit der jeweiligen TDMA-Slot Map der Referenzknoten 635. Das Netzwerk ist jetzt komplett in Aktivitätsbereitschaft. Ab jetzt beginnt der korrekte Ablauf dieser TDMA-Slot Map und der normale Messablauf, in dem der Administrationsknoten im ersten Broadcast Slot der TDMA-Slot Map die erfolgreiche Segmentkonfiguration bekannt gibt.

Die in Figur 3a gezeigte TDMA Slot Map zeigt schematisch drei Spalten, und zwar eine den jeweiligen Slot (Zeitschlitz) angebende erste Spalte 300, eine zweite Spalte 305, die den jeweiligen nach der Angabe in Figur 1 adressierten Kommunikationspartner angibt sowie eine die in dem jeweiligen Slot erfolgende Aktion angebende dritte Spalte 310. Die TDMA Slot Map besteht in diesem Ausführungsbeispiel aus 32 Slots, es sind aber auch größere oder kleinere Längen der TDMA Slot Map denkbar. Bei kleineren Längen ist die Anzahl an teilnehmenden Referenzknoten und damit die Größe des Lokalisierungssegments oder die Topologie der DC entsprechend anzupassen. Wie aus Figur 3a zu ersehen, teilt der Administrationsknoten in seinem ersten regulären Forward Broadcast-Paket im ersten Slot der der TDMA-Slot Map dem Lokalisierungssegment die erfolgreiche Segmentkonfiguration mit. Diese Nachricht wird entlang der Daisy Chains propagiert. Über ein Return Broadcast-Paket erhält er die Bestätigung dafür aus den Daisy Chains des Segments. Das Broadcast-Paket, das die erfolgreiche Segmentkonfiguration bekannt gibt, wird vom Administrationsknoten mit jedem ersten Slot der TDMA-Slot Map so lange wiederholt, bis von allen Referenzknoten eine Bestätigung erhalten wurde. Im Regelfall wird dies bereits nach dem ersten Durchlauf der TDMA-Slot Map der Fall sein. Das Netzwerksegment hat dann seinen Konfigurationszustand erreicht und ist bereit für die Lokalisierung von Teilnehmern. Die verwendete Slot Map stellt dabei nur eine mögliche Variante dar und es sind auch andere Realisierungen denkbar.

Wie oben beschrieben, verhalten sich Ortungsobjekte während des gesamten Segment- oder Netzwerkinitialisierungsprozesses passiv. Ist dieser abgeschlossen, beginnen sie sich in das Lokalisierungssegment einzugliedern. Es sei an dieser Stelle darauf verwiesen, dass sich der Anmeldeprozess im Fall, dass das Ortungsobjekt die gesamte Initialisierungskommunikation eines Netzwerksegments mitgehört hat, stark verkürzt, da alle aktuellen Informationen zum Zustand des Netzwerks simultan mit dem Übergang des Lokalisierungssegments in den Messprozess bereits vorhanden, kommuniziert und verarbeitet sind. Der Anmeldeprozess findet dann nahezu umgehend und nur unter Kommunikation einer minimalen Datenmengen statt.

Um ein Übersprechen von (UWB-)Kommunikationskanälen zwischen verschiedenen Segmenten des Lokalisierungsnetzwerkes zu verhindern, wäre es vorteilhaft, eine Gesamtzahl von 256 Kanalbündeln bzw. entsprechend von 1792 Kanälen zu erzeugen. Da eine solche Anzahl orthogonaler, d.h. nicht übersprechender Kanäle nicht beliebig gewählt werden kann, wird in Figur 3b ein mit erheblich geringerem Aufwand realisierbarer Ansatz gezeigt. Das Kanalbündel, das in einem einzelnen Segment des Lokalisierungsnetzwerks verwendet wird, ist dabei als ganzzahliger Rest der Division der SID durch eine beliebige, a priori konfigurierte Anzahl an Kanalbündeln gegeben, wobei es natürlich wie in dem in Figur 6 dargestellten Beispiel von Vorteil ist, eine Quadratzahl einer ganzzahligen Anzahl an SIDs zu verwenden, die die Kantenlänge der in den Figuren gegebenen Kacheln angibt (in den Beispielen 9 bzw. 25). Die gewählte Vergabereihenfolge von SIDs in den dargestellten Beispielen ist dabei in einem regulären Muster gewählt, die eine geeignete Realisierung in einem isotropen Raum darstellt. Je nach realem Einsatzszenario kann ein beliebiges, dem jeweiligen Anwendungsfall angepasstes Muster zur Vergabe der SID gewählt werden um die Sicherheit gegen Übersprechen weiter zu verbessern. Die dargestellte Realisierung bildet also nur eine mögliche Ausprägung des beschriebenen Verfahrens ab.

## Patentansprüche

1. Verfahren zur Initialisierung wenigstens eines Netzwerksegments eines Netzwerks zur drahtlosen Ortung von in einem begrenzten Raum (115) angeordneten, beweglichen Ortungsobjekten mittels gepulster Funksignale, wobei das wenigstens eine Netzwerksegment in dem begrenzten Raum (115) wenigstens drei räumlich verteilte, ein kettenförmiges Kommunikationsnetzwerk bildende und kommunikationstechnisch autarke Referenzknoten (135 - 180) aufweist, wobei ein in dem begrenzten Raum (115) angeordnetes Ortungsobjekt (288) mittels einer von den wenigstens drei Referenzknoten (135 - 180) durchgeführten, abstandsbasierten Trilateration lokalisierbar ist, und wobei eine Kommunikation allgemeiner Informationen mittels Broadcast-Kanälen erfolgt, **dadurch gekennzeichnet, dass** die Referenzknoten (135 - 180) in einer Wartestellung Broadcast-Kanäle abhören, bis die Referenzknoten initiale Informationen darüber empfangen, ob und in welchem Netzwerksegment sie ein Referenzknoten sind oder nicht.

2. Verfahren nach Anspruch 1, **dadurch gekennzeichnet, dass** die Referenzknoten (135 - 180) durch Kommunikation mit allen erreichbaren Referenzknoten eine Nachbar-Datenbank erzeugen.

3. Verfahren nach Anspruch 2, **dadurch gekennzeichnet, dass** die Referenzknoten (135 - 180) die Nachbar-Datenbank während der Initialisierung an andere Referenzknoten mitteilen.

4. Verfahren nach Anspruch 2 oder 3, **dadurch gekennzeichnet, dass** in der Nachbar-Datenbank Informationen über empfangene Signalamplituden und/oder über Hintergrundrauschen enthalten sind und diese Informationen während der Initialisierung an andere Referenzknoten mitgeteilt werden.

5. Verfahren nach einem der Ansprüche 2 bis 4, **dadurch gekennzeichnet, dass** in der Nachbar-Datenbank Informationen über den Abstand zu benachbarten Referenzknoten enthalten sind und diese Informationen während der Initialisierung an andere Referenzknoten mitgeteilt werden.

6. Verfahren nach einem der Ansprüche 2 bis 5, **dadurch gekennzeichnet, dass** in der Nachbar-Datenbank statistische Informationen über die Häufigkeit des Zustandekommens von Abstandsmessungen zu benachbarten Referenzknoten enthalten sind und diese Informationen während der Initialisierung an andere Referenzknoten mitgeteilt werden.

7. Verfahren nach einem der vorhergehenden Ansprüche, **dadurch gekennzeichnet, dass** wenigstens ein Administrationsknoten an die Referenzknoten Setup-Informationen kommuniziert, welche in einer Kette an andere Referenzknoten sukzessive weiterkommuniziert werden.

8. Verfahren nach Anspruch 7, **dadurch gekennzeichnet, dass** der wenigstens eine Administrationsknoten in wenigstens einem Referenzknoten implementiert ist.

9. Verfahren nach Anspruch 7, **dadurch gekennzeichnet, dass** die Setup-Informationen die Ketten-Länge sowie entsprechende UIDs und LIDs für die an der Kette beteiligten Referenzknoten umfassen.

10. Verfahren nach einem der vorhergehenden Ansprüche, **dadurch gekennzeichnet, dass**, ausgehend von einem letzten Referenzknoten in einer Kette, über die Referenzknoten der Kette sukzessive ein propagierender Bestätigungs-Rücklauf an die anderen Referenzknoten und den Administrationsknoten erfolgt.

11. Verfahren nach Anspruch 10, **dadurch gekennzeichnet, dass** die in dem Bestätigungs-Rücklauf propagierten Informationen die Rückgabe einer jeweiligen LID umfassen.

12. Verfahren nach einem der vorhergehenden Ansprüche, **dadurch gekennzeichnet, dass** ein Administrationsknoten Initialisierungspakete an die Referenzknoten versendet, welche wenigstens eine Lokalisierungsmessanforderung enthalten.

13. Verfahren nach Anspruch 12, **dadurch gekennzeichnet, dass** die Initialisierungspakete ein Kommando, welches die Segment-Initialisierung signalisiert und weitere Informationen, welche die Netzwerktopologie und/oder den Konfigurationszustand des Administrationsknotens beschreiben, umfassen.

14. Verfahren nach Anspruch 4 bis 6, **dadurch gekennzeichnet, dass** der Administrationsknoten auf der Grundlage der statistischen Informationen über die Häufigkeit des Zustandekommens von Abstandsmessungen zu benachbarten Referenzknoten eine Netzwerk-Segmentstruktur in Form wenigstens einer Kette aus Referenzknoten bildet.

15. Verfahren nach Anspruch 14, **dadurch gekennzeichnet, dass** wenigstens zwei, im Wesentlichen gleich lange Ketten aus Referenzknoten gebildet werden.

16. Verfahren nach einem der Ansprüche 7 bis 14, **dadurch gekennzeichnet, dass** der Administrationsknoten am Ende der Initialisierung den Referenzknoten weitergehende Informationen über Eigenschaften des Kommunikationsnetzwerks und über eine gewünschte Ortungsmethode mitteilt, und zwar in Form eines Almanachs und/oder in Form logischer Räume und/oder in Form von Transformationsinformationen für ein globales Koordinatensystem.

17. Netzwerksegment eines Netzwerks zur drahtlosen Ortung von in einem begrenzten Raum (115) angeordneten, beweglichen Ortungsobjekten mittels gepulster Funksignale, wobei das Netzwerksegment wenigstens drei räumlich verteilte, ein kettenförmiges Kommunikationsnetzwerk bildende und kommunikationstechnisch autarke Referenzknoten (135 - 180) aufweist, welche eingerichtet sind, das Verfahren gemäß einem der Ansprüche 1 bis 16 durchzuführen.

18. Computerprogramm, umfassend Befehle, welche bewirken, dass das Netzwerksegment nach Anspruch 17 die Verfahrensschritte gemäß einem der Ansprüche 1 bis 16 ausführt.

19. Maschinenlesbarer Datenträger, auf welchem ein Computerprogramm gemäß Anspruch 18 gespeichert ist.

## Claims

1. Method for initialising at least one network segment of a network for the wireless locating of moving locating objects arranged in a limited space (115) by means of pulsed radio signals, wherein the at least one network segment in the limited space (115) has at least three spaced apart reference nodes (135 - 180) which form a chain-shaped communication network and which are autarkic in terms of communication, wherein a locating object (288) arranged in the limited space (115) is able to be located by means of a distance-based trilateration carried out by the at least three reference nodes (135- 180), and wherein general information is communicated by means of broadcast channels, **characterised in that** the reference nodes (135 -180) listen to the broadcast channels in a standby position until the reference nodes receive initial information about whether or not they are a reference node, and in which network segment they are.

2. Method according to claim 1, **characterised in that** the reference nodes (135 - 180) generate a neighbour database by means of communication with all reachable reference nodes.

3. Method according to claim 2, **characterised in that** the reference nodes (135 - 180) communicate the neighbour database to other reference nodes during the initialisation.

4. Method according to claim 2 or 3, **characterised in that** the neighbour database contains information about received signal amplitudes and/or background noises, and this information is communicated to other reference nodes during the initialisation.

5. Method according to one of the claims 2 to 4, **characterised in that** the neighbour database contains information on the distance to neighbouring reference nodes, and this information is communicated to other reference nodes during the initialisation.

6. Method according to one of the claims 2 to 5, **characterised in that** the neighbour database contains statistical information on the frequency of the occurrence of distance measurements to other reference nodes, and that this information is communicated to other reference nodes during the initialisation.

7. Method according to one of the preceding claims, **characterised in that** at least one administration node communicates set-up information to the reference nodes, which is successively further communicated in a chain to other reference nodes.

8. Method according to claim 7, **characterised in that** the at least one administration node is implemented in at least one reference node.

9. Method according to claim 7, **characterised in that** the set-up information comprises the chain length as well as corresponding UIDs and LIDs for the reference nodes participating on the chain.

10. Method according to one of the preceding claims, **characterised in that** a propagating confirmation response starting from a last reference node in a chain takes place to the other reference nodes of the chain and the administration node successively via the reference nodes of the chain.

11. Method according to claim 10, **characterised in that** the information propagated in the confirmation response comprises the feedback of a respective LID.

12. Method according to one of the preceding claims, **characterised in that** an administration node transmits initialisation packages to reference nodes which contain at least one localisation measurement request.

13. Method according to claim 12, **characterised in that** the initialisation packages include a command which signalises the segment initialisation and further information that describes the network topology and/or the configuration status of the administration node.

14. Method according to claim 4 to 6, **characterised in that** the administration node forms a network segment structure from reference nodes, based on the statistical information about the frequency of occurrence of the distance measurements to neighbouring reference nodes, in the shape of at least one chain.

15. Method according to claim 14, **characterised in that** at least two, substantially equally long chains are formed from reference nodes.

16. Method according to one of the claims 7 to 14, **characterised in that**, at the end of the initialisation, the administration node communicates further information to the reference nodes regarding the properties of the communication network and about desired locating methods, and it does this in the form of an almanac and/or in the form of logical spaces and/or in the form of transformation information for a global coordinate system.

17. Network segment of a network for the wireless locating of moving locating objects arranged in a limited space (115) by means of pulsed radio signals, wherein the network segment has at least three spaced apart reference nodes (135 - 180) which form a chain-shaped communication network and which are autarkic in terms of communication and which are configured to carry out the method according to one of claims 1 to 16

18. Computer program comprising commands which cause the network segment according to claim 17 to carry out the method steps according to one of the claims 1 to 16.

19. Machine-readable data storage medium on which a computer program in accordance with claim 18 is saved.

## Revendications

1. Procédé d'initialisation d'au moins un segment de réseau d'un réseau destiné à la localisation sans fil d'objets de localisation mobiles, disposés dans un espace (115) limité au moyen de signaux radio à impulsions, où l'au moins un segment de réseau présente dans l'espace (115) limité au moins trois noeuds de référence (135 à 180) autosuffisants du point de vue technique de communication, distribués spatialement, formant un réseau de communication en forme de chaîne, où un objet de localisation (288) disposé dans l'espace (115) limité peut être localisé au moyen d'une trilatération sur la base d'un espace, exécutée par au moins trois noeuds de référence (135 à 180), et où une communication d'informations générales a lieu au moyen de canaux de diffusion, **caractérisé en ce que** les noeuds de référence (135 à 180) captent des canaux de diffusion dans une position de veille jusqu'à ce que les noeuds de référence y reçoivent des informations initiales s'ils constituent ou non un noeud de référence et dans quel segment de réseau.

2. Procédé selon la revendication 1, **caractérisé en ce que** les noeuds de références (135 à 180) génèrent une banque de données de voisinage par une communication avec tous les noeuds de références pouvant être atteints.

3. Procédé selon la revendication 2, **caractérisé en ce que** les noeuds de références (135 à 180) informent la banque de données de voisinage sur d'autres noeuds de référence pendant l'initialisation.

4. Procédé selon la revendication 2 ou la revendication 3, **caractérisé en ce que** des informations sur des amplitudes de signaux et/ou sur des bruits de fond sont contenues dans la banque de données de voisinage et ces informations sont communiquées à d'autres noeuds de référence pendant l'initialisation.

5. Procédé selon l'une des revendications 2 à 4, **caractérisé en ce que** des informations sur la distance par rapport à des noeuds de référence voisins sont contenues dans la banque de données de voisinage et ces informations sont communiquées à d'autres noeuds de référence pendant l'initialisation.

6. Procédé selon l'une des revendications 2 à 5, **caractérisé en ce que** des informations statistiques sur la fréquence des réalisations de mesures de distances par rapport à des noeuds de référence voisins sont contenues dans la banque de données de voisinage et ces informations sont communiquées à d'autres noeuds de référence pendant l'initialisation.

7. Procédé selon l'une des revendications précédentes, **caractérisé en ce qu'**au moins un noeud d'administration communique des informations de mise à jour aux noeuds de référence, lesquelles sont communiquées sous forme d'une chaîne à d'autres noeuds de référence successifs.

8. Procédé selon la revendication 7, **caractérisé en ce que** l'au moins un noeud d'administration est mis en oeuvre dans au moins un noeud de référence.

9. Procédé selon la revendication 7, **caractérisé en ce que** des informations de mise à jour comprennent la longueur des chaînes ainsi que des UID et des LID pour les noeuds de référence impliqués dans la chaîne.

10. Procédé selon l'une des revendications précédentes, **caractérisé en ce qu'**en partant d'un dernier noeud de référence dans une chaîne, il se produit un retour de confirmation concernant les autres noeuds de référence et le noeud d'administration se propageant de manière successive par le biais des noeuds de référence de la chaîne.

11. Procédé selon la revendication 10, **caractérisé en ce que** les informations propagées dans le retour de confirmation comprennent le retour d'un LID respectif.

12. Procédé selon l'une des revendications précédentes, **caractérisé en ce qu'**un noeud d'administration envoie des paquets d'initialisation aux noeuds de référence, lesquels contiennent au moins une exigence de mesure de localisation.

13. Procédé selon la revendication 12, **caractérisé en ce que** les paquets d'initialisation comprennent un ordre, lequel signale l'initialisation du segment et d'autres informations, lesquelles décrivent la topologie du réseau et/ou l'état de configuration du noeud d'administration.

14. Procédé selon les revendications 4 à 6, **caractérisé en ce que** le noeud d'administration forme une structure de segments de réseau en forme d'au moins une chaîne constituée de noeuds de référence sur la base des informations statistiques concernant la fréquence de la réalisation de mesures de distances par rapport à des noeuds de référence voisins.

15. Procédé selon la revendication 14, **caractérisé en ce qu'**au moins deux chaînes de longueur sensiblement égale sont formées à partir de noeuds de référence.

16. Procédé selon l'une des revendications 7 à 14, **caractérisé en ce que** le noeud d'administration communique à la fin de l'initialisation des noeuds de référence des informations générales sur des propriétés du réseau de communication et sur un procédé de localisation souhaité, et en l'occurrence sous forme d'un agenda et/ou sous forme d'espaces logiques, et/ou sous forme d'informations de transformation pour un système de coordonnées global.

17. Segment de réseau d'un réseau pour la localisation sans fil d'objets de localisation mobiles disposés dans un espace (115) limité au moyen de signaux radio à impulsions, où le segment de réseau présente au moins trois noeuds de référence (135 à 180) autosuffisants du point de vue technique de communication, distribués spatialement, et formant un réseau de communication en forme de chaîne, lesquels sont conçus pour exécuter le procédé selon l'une des revendications 1 à 16.

18. Programme informatique comprenant des ordres, lesquels ont pour effet que le segment de réseau selon la revendication 17 exécute les étapes de procédé selon l'une des revendications 1 à 16.

19. Support de données lisible par machine sur lequel est stocké un programme informatique selon la revendication 18.
